# EUROPEAN PATENT APPLICATION

(11) **EP 0 827 066 A2**
(43) Date of publication of application: **04.03.1998**
(21) Application number: 97305197.2
(22) Date of filing: 14.07.1997
(51) Int. Cl.: G06F 3/14

(54) **Multi-display computer system**

(30) Priority: 30.08.1996 GB 9618105
(71) Applicant: NCR International, Inc., Dayton, Ohio 45479 (US)
(72) Inventor: Sinclair, Colin A., Carnoustie, Angus DD7 6DL (GB)
(74) Representative: Irish, Vivien Elizabeth

(57) **Abstract**

A PC-based system has two or more user interfaces each comprising an input device (16,18) and a display screen (12,14). A windowing system (32) is connected to a graphical user interface (36) by a router (34), so that each display screen can display a different window simultaneously in response to different inputs from their associated input devices.

The user interfaces may be the front (12,56) and rear (14,66) stations of an automated teller machine (50,64), or may be separate interfaces on a personal computer.

## Description

This invention relates to a multi-display computer system, that is, a system in which at least two different displays are provided simultaneously.

It is conventional for a PC (Personal Computer) to have a single display screen, which may be controlled through a display subsystem which can combine one or more system applications with one or more user-selected applications, and to provide an appropriate display. If a windows environment is provided, the system and user-selected applications will be combined by a windowing subsystem, which controls a GUI (Graphical User Interface) display subsystem controlling the display, and which in turn is controlled by input from a keyboard or a mouse or other pointing device. Such a combination of a display screen and input devices will be referred to as a user interface.

Our copending patent application EPO 622 930 published on 2 November 1994 discloses an arrangement in which the same display window is provided simultaneously on two screens.

Current windows-based PC operating systems, such as Windows NT and OS/2 Presentation Manager support windows applications providing high quality graphics. The windowing system and GUI are regarded as industry standards. Each windows application is displayed on the single user interface provided by current windows-based PC operating systems.

In a special application, a PC forms the core of a financial self service terminal such as an ATM (Automated Teller Machine), which can dispense cash, issue account statements, accept cash deposits etc. ATMs sometimes incorporate a front screen for the cardholder customer, with associated keyboard for input, and optionally a pointing device such as a touch screen. Currently, ATM manufacturers provide a proprietary user interface on the customer screen consisting of a proprietary display subsystem and proprietary interfaces to input devices. The provision of an industry-standard interface for the cardholder interface is highly desirable.

An ATM conventionally is provided with a second user interface at the rear of the device, for use by a service engineer or employee of the financial institution which operates the ATM. The second screen is inaccessible to cardholders. The two display screens and their associated input devices will be hereinafter referred to as a front station and a rear station respectively. Currently only the front station can operate with a windows-based user interface.

Further, it would be desirable to be able to connect a conventional ATM to a remote station, at which a third display is provided.

It is the object of the invention to provide a personal computer system having two or more GUIs in which each GUI can support a different display in a windows-based environment.

According to the invention there is provided a personal computer (PC) system comprising a processor, a windowing subsystem, a graphical user interface (GUI) subsystem, and a first user interface comprising a display means and associated input means, characterized by at least one further user interface comprising a display means and associated input means, and router means connected between the windowing subsystem and the GUI subsystem so that in response to a different input message from each input means, a different window can be drawn on each display means, the router routing appropriate response messages to the correct part of a software application, said parts being associated respectively with the user interface and the further user interface.

The invention will now be described by way of example only with reference to the accompanying drawings in which:-
Figure 1 illustrates the invention implemented in a personal computer environment;
Figures 2(a) and 2(b) illustrate respectively front and rear views of an automated teller machine (ATM); and
Figure 3 illustrates the invention implemented in an ATM environment.

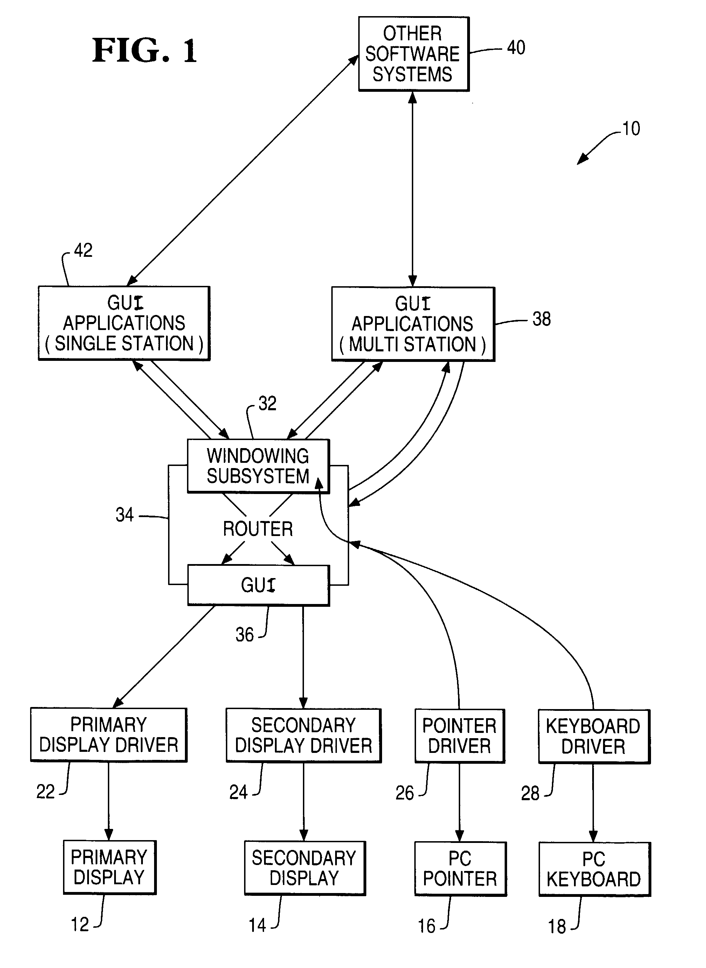

In Figure 1 a personal computer (PC) 10 is provided with a primary display screen 12 and a secondary display screen 14. The primary display screen 12 has associated with it, and forming a User Interface, a PC pointer 16 such as a mouse or touchscreen, and the secondary display screen 14 has associated with it a PC keyboard 18. The items 12, 14, 16 and 18 are all hardware devices.

Within the software systems of the PC 10 are primary and secondary display drivers 22, 24, connected respectively to the primary and secondary displays 12, 14; a pointer driver 26 connected to PC pointer 16, and a keyboard driver 28 connected to PC keyboard 18.

The PC 10 has a Windowing system 32 connected by a software router 34 to a software Graphical User Interface (GUI) 36, which is connected to the display drivers 22, 24. The pointer driver 26 and keyboard driver 28 are connected through the router 34 to the windowing subsystem 32. The windowing subsystem 32 is connected to a multi-station GUI application 38 and to a single station GUI application 42 through which connections are made to other software systems 40 of the PC 10. The other systems will include standard operating software, such as OS/2 and Windows NT.

The multi-station GUI 38 can be regarded as a station - aware application, and makes use of the router 34. The single-station GUI 42 can be regarded as a station-unaware application, and has no awareness of the router 34. In display operation, the windows created by the applications 38,42 are routed to the correct display driver by the router 34.

When the user of the PC pointer 16 inputs a message through the pointer driver 26, the router 34 and windowing subsystem 32 interact to route a message to the correct part of the application 38,42 which is associated with the primary display 12. When the user of the PC keyboard 18 inputs a message, a relevant display is similarly routed to the correct part of the application 38,42, which is associated with the secondary display 14. The arrangement according to the invention is such that the pointer 16 and keyboard 18 can be used simultaneously, and appropriate messages are routed to the relevant applications 38,42. This is achieved the router 34 which maintains associations of devices and parts of an application with each station. The router maintains state information about each station, such as window in focus, cursor position etc.

Each user interface 12, 16 and 14,18 operates independently in a windows environment, and in a manner compatible with industry standard operating systems. This has not previously been possible for a PC.

For such a dual GUI operation, a multi-station application 38 can be written to make use of more than one station. This can be in a standard windows API (Application Programme Interface).

Figure 1 also shows a standard single station GUI application, which can be used on any station.

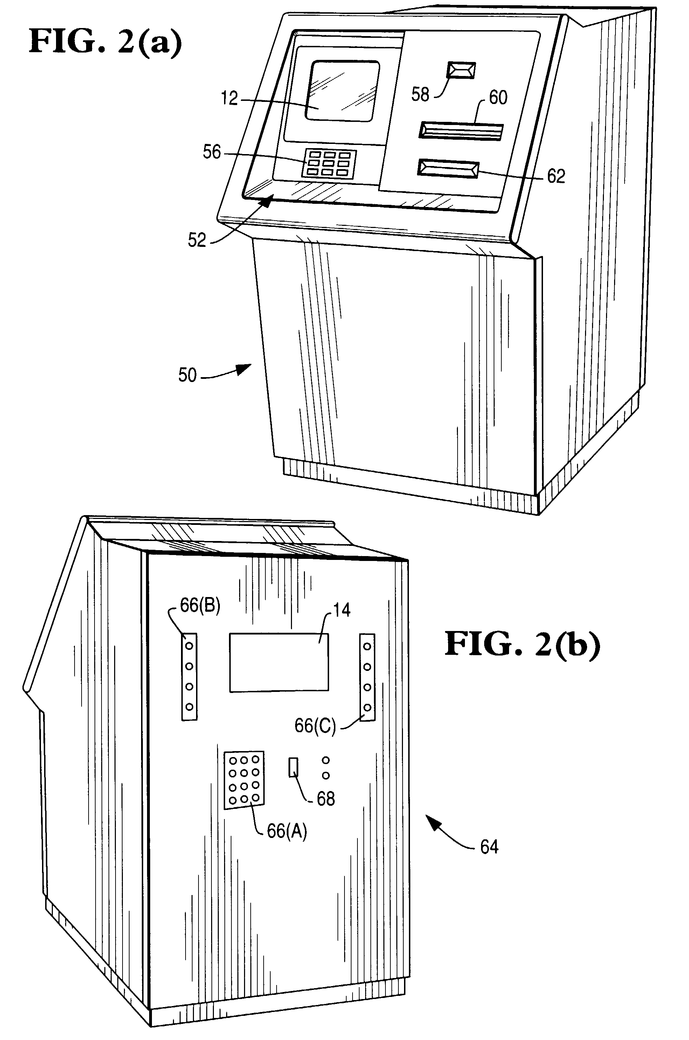

Figure 2(a) illustrates the external features of the front of an ATM 50 which has a front station 52 which is provided with a display screen 12, which may be a touchscreen, a keyboard 56, a card entry slot 58, cash delivery slot 60 and statement delivery slot 62. The ATM is run by a Personal Computer (not shown).

In use, a user inserts a user card into the slot 58, and keys in a personal identity number (PIN) on the keyboard 56; the screen 12 then displays a message such as "please wait while your card is checked"; if the card and PIN are acceptable, the user can request by means of the keyboard 56 the dispensing of cash through cash delivery slot 60, the provision of a statement through statement delivery slot 62, etc. The screen 12 displays appropriate messages during the transactions.

ATMs are also provided with a rear station, shown in Figure 2(B) which is not accessible to a cardholder. The rear station 64 has a display screen 14, a key pad in three parts 66(A) (b) and (C), and a switch 68. The rear station is used by bank operators and field engineers to program, service and maintain the ATM and in currently-available devices provides a text-only display.

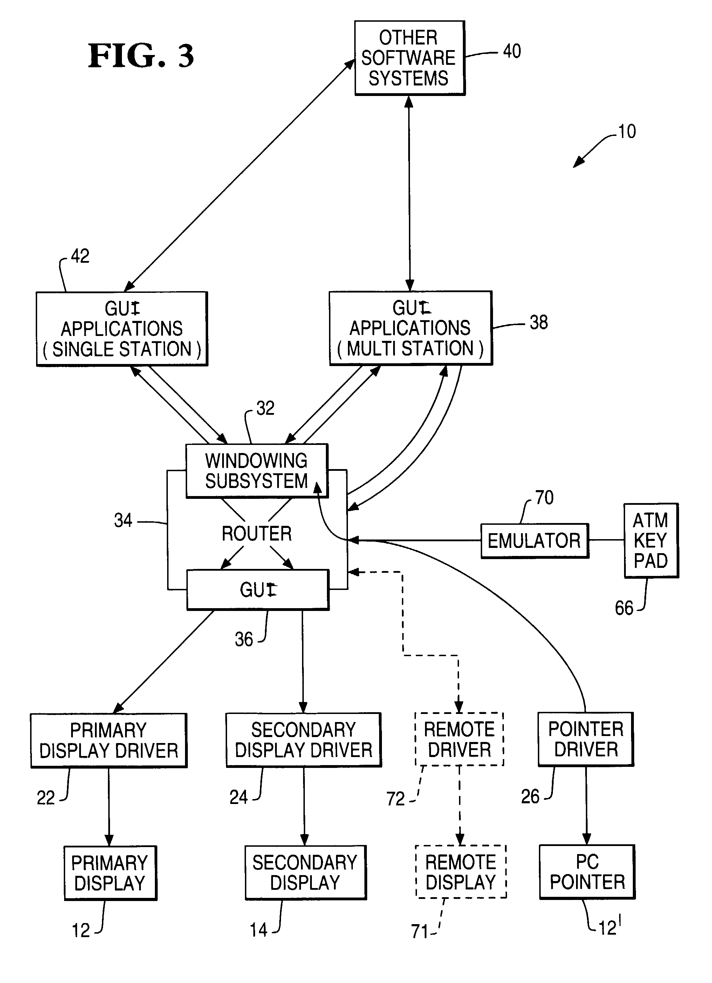

Figure 3 is similar to Figure 1, and illustrates the invention applied to an ATM. Parts of the system identical to those in Figure 1 are given identical reference numerals. Thus the display on the front station of the ATM forms the primary display 12, and the display on the rear station of the ATM forms the secondary display 14. Since the display 12 is a touchscreen, it also constitutes the PC pointer, shown as 12' on Figure 3.

It is common for ATMs to be provided with proprietary keypads such as 66, which are in non-PC format. The keypad 66 is connected through an emulator 70 to the router 34.

In operation, when a user of the ATM front station 52 enters a financial transaction request by the touchscreen 12', the message is passed by the pointer driver 26 to the router, and the windowing system 32 and router 34 operate to supply a message to the correct part of the application 38,42, which is associated with the front station. Simultaneously a bank operator may enter an administrative enquiry or service instruction by the ATM keypad 66, which is converted to PC-format by the emulator and passed to the router 34 which, with the windowing subsystem 32, operates to supply a message to the correct part of an application 38,42, which is associated with the rear station.

As with the conventional PC embodiment shown in Figure 1, both displays 12, 14 can display different windows environments independently. Off-the-shelf windows packages may be operated by the ATM on both the front and rear stations.

The software conventionally required to operate an ATM can be provided in the GUI application 38,42 and can be written in a standard windows API. Station-aware applications 38 require to write to an application programming interface supplied by the router 34.

It may also be a requirement in an ATM to have one or more remote user interfaces (remote display and keyboard); one such remote user interface is indicated at 71, and is connected through a remote driver 72 to the router 34. An input device (not shown) is also provided. Thus for example the display on the rear screen 14 could be displayed remotely if required, and input could come from the keypad 66.

In the ATM environment shown in Figures 2 and 3, the front station display 12 may for example be an SVGA (Super Video Graphics Array) monitor and the rear station display 14 may for example be a 16-colour or monochrome LCD (Liquid Crystal Display) capable of supporting VGA resolution.

## Claims

1. A personal computer (PC) system (10) comprising a processor, a windowing subsystem (32) and a graphical user interface (GUI) subsystem (36) loaded on the processor, and a first user interface comprising a display means (12) and associated input means (16), characterized by at least one further user interface comprising a display means (14) and associated input means (18), and router means (34) loaded on the processor and connected between the windowing subsystem (32) and the GUI subsystem (36) so that in response to a different input message from each input means (16,18), a different window can be drawn on each display means (12,14), the router means (34) routing appropriate response messages to the correct part of a software application (38) said correct parts being associated respectively with the user interface (12,16) and the further user interface (14,18).

2. A PC system according to claim 1, characterized in that the router means (34) comprises a standard windows application program interface.

3. A PC system according to claim 1 or claim 2, characterized in that the first user interface comprises the front station of a financial self service terminal and the further user interface comprises the rear station of said terminal.

4. A method of operating a personal computer, characterized by the steps of: providing a plurality of user interfaces each comprising a display screen (12,14) and at least one input device (16,18); and operating the display screen of each user interface by a graphical user interface (GUI) subsystem (36) connected to a windowing subsystem (32) by routing means (34); delivering a different window to a display driver (22,24) associated with a relevant display screen (12,14), the routing means receiving input messages from each input device and directing an appropriate response message to the correct part of a software application (38), said correct parts being associated respectively with each user interface.

5. A method according to claim 4, characterized by the windowing subsystem (32) being an industry standard operating system.

6. A method according to claim 4 or claim 5, characterized by the windowing subsystem (32) being driver by at least one customer application.

7. A method according to any one of claims 4 to 6, characterized by the further step of providing messages from a non-personal computer input device (66) through emulator means (70) to the routing means (34).
